# EUROPEAN PATENT APPLICATION

(11) **EP 0 764 615 A1**
(43) Date of publication of application: **26.03.1997**
(21) Application number: 95202567.4
(22) Date of filing: 22.09.1995
(51) Int. Cl.: C04B 28/04, C04B 18/04

(54) **Mineralising of particles of fresh wood and agricultural waste for producing cement-bonded boards**

(71) Applicant: Thermoform Nederland B.V., 3781 TC Voorthuizen (NL)
(72) Inventor: Tscherbakow, Anatoli Sergeewitsch, 141700 Moscow Region, g. Dolgoprudnyi (RU); Golzewa, Ludmila Wjatscheslawowna, 141007 Moscow Region, g. Mytischi (RU); Podtschufarow, Sergei Wladimirowitsch, 141007 Moscow Region, g. Mytischi (RU); Kutscherjawyi, Wladimir Iwanowitsch, 141070 Moscow Region, g. Kaliningrad (RU); Podtschufarow, Wladimir Sergeewitsch, 143390 Moscow Region, Narofominski Rayon (RU)
(74) Representative: Voncken, Bartholomeus Maria Christiaan

(57) **Abstract**

Binder for wood-cement composites comprising in % by mass: Portland cement 26.2 - 87.3, distillate from soda-ash production 0.4 - 7.3, aqueous suspension of solid waste of soda-ash production 5.4 - 73.4.

In preparing the binder Portland cement, aqueous suspension of solid waste of soda-ash production solid waste, distillate from soda-ash production and water are supplied to the mixer and continuously mixed. Wood aggregate may also be supplied to the same mixer.

## Description

This invention relates to manufacturing of building materials such as Arbolite, Fibrolite and Cement Bonded Particle Boards using wood aggregate and cement binder. A known binder for wood-cement composites comprises Portland cement and chemical additives.

There is a known raw blend for the production of wood-mineral materials comprising in % by mass: Portland cement 22.9-47.8, lime 3.3-18.0, wood aggregate 16.9-20.0, chloride additive - distillate, waste from soda-ash production 1.0-5.0, and water for the remainder.

The known production method is disadvantageous because it does not optimally utilise the wastes of soda-ash production and does use expensive and rare mineral additives (lime).

The objective of the invention is to decrease the demands put on the quality of the aggregate, i.e. utilisation of wood aggregate with increased water extracts, without the reduction of mechanically performance qualities, to refrain from mineral additives and to improve the ecological circumstance as a result of better using utilisation of wastes from the production of soda-ash.

The objectives drawn up are achieved by a binder comprising of a distillate and an aqueous suspension of solid waste from soda-ash production with the following relation of components (on a dry mass basis) in %:

| | |
|---|---|
| Portland cement | 26.2 - 87.3 |
| soda-ash production distillate | 0.4 - 7.3 |
| aqueous suspension of solid waste of soda-ash production | 5.4 - 73.4 |

The wastes are a secondary product of the soda-ash production and are known from literature.

The following wastes originate from the production of 1 ton of soda-ash: drained chloride, comprising of about 15-125 gr./l CaCl2, 55-58 gr./l NaCL and 20-25 gr./l suspended Ca(OH)2, CaCO3, CaSO4 - total 9,1 m³; slam of the cleaning of salt comprising about 250-300 gr./l suspended CaCO and Mg(OH)2-0,2 m³; and partially burned substance which originate during the burning of carbonate and chalk separated during the process of production of lime suspension comprising CaCO3, CaO and ash of fuel, about 55 kg.

In accordance with the technology for the soda-ash production, the waste that originates from the distillation, is divided into a liquid substance, drained chloride, the above mentioned distillate liquid, and a solid waste comprising insoluble elements (slam, ash and a partially burned substance) occurring as a aqueous suspension. The distillate and aqueous suspension of solid waste are separated by a centre pump to "White Sees", i.e. slam collections (separately for liquid an solid waste) with a surface of 2-3 km² and capacity up to 2 million tons.

Distillate, a waste of the soda-ash production, is a solution of chloride-calcium and chloride-natrium, which is polluted by blending with carbonic chalk and sulphuric chalk, slaked lime, sand and other substances primarily in solid. Generally, the quantity of the polluting substances in the distillate occur in the range of 25-35 gr/l or 200-280 kg/ton soda-ash.

Elaborately characteristics are displayed in table 1 and 2. Dimensions of values shown in the tables are specific for the soda-ash production. A value 1 in the tables corresponds with 1/20 gr. equivalent per 1 liter solution. Aqueous suspension with a concentration of 60-80% solid waste of soda-ash production for analyses is extracted from slam collections ("White Sees"). It is possible to utilise the suspension with other concentrations of waste.

In table 3 the results are shown of the chemical analysis of 20 tests (on a dry mass basis). It is shown by the above mentioned information that the different wastes have a constant composition. Because of this fact they could be utilised for the production of materials without any kind of selection.

In examples not seasoned and not debarked wood from an asp is used with a proportion of water extract substances of 2,9 - 3,2%. The binder of the invention has been used for raw blends to produce samples of Arbolite, Fibrolite and Cement Bonded Particle Board.

The technology for the production of samples consisted of the following operations:
Portland Cement mark 500, aqueous suspension of solid waste, distillate and water wood aggregate have been dosed and are supplied to a mixer and continuously mixed.

After finishing the mixing the blend is distributed into moulds with dimensions: Arbolite samples - 150x150x150 mm; Cement Bonded Particle Board samples - 300x300x16 mm and Fibrolite samples - 300x300x50 mm.

The samples have been pressed with pressure: Arbolite samples - 0,5 MPa; Cement Bonded Particle Board samples - 2,5 MPa and Fibrolite samples - 0,1 MPa. The samples have been hardened under normal conditions with a temperature of 20°C and humidity of 60%.

The performance qualities have been measured after 21 days for Cement Bonded particle Board and 28 days for Arbolite en Fibrolite.

The tests are executed in accordance with the standards (GOST) for these building materials: GOST 119222-84 "Arbolite and products thereof. Technical conditions" (strength under pressure and average density); GOST 26816-86 "Cement Bonded Particle Boards. Technical conditions" (bending strength and average density); GOST 8928-81 "Fibrolite boards of Portland Cement. Technical conditions" (bending strength and density).

In examples 1-3 the consumption for components are chosen minimum, average and maximum, within the framework of the proven formula of the invention.

In examples 4 and 5 (according to the known method) the consumptions are taken comparable to examples 1 and 2 for a comparison of the results.

As is shown by table 4 the bending strength in examples 4 and 5 are 30,2 - 36,4% less than when making use of the binder of the invention. This can be explained by the complex influence of all components present in the waste of the soda-ash production on the water extract substances of the wood aggregate.

The analysis of results confirms the effectiveness of the use of the binder of the invention with use of a not debarked aggregate. This manifests itself in the increasing of the product strength, simplification of the technology at the expense of exception of chemical additives and decreased demands for the quality of aggregates, improvement of the ecological circumstance by utilising waste of industrial production.

**Table 1**

| Chemical composition of distillate | | |
|---|---|---|
| Name | Transparency part | Suspended solution |
| NH₃ | 0,07-0,1 | - |
| CaCl₂ | 45,0 | - |
| NaCl | 20,0 | - |
| CaSO₄ | 0,8 | 0,8 |
| Ca(OH)₂ | 0,9 | 2,0-2,5 |
| CaCO₃ | - | 2,0-5,0 |

**Table 2**

| Ionical composition of fluid | |
|---|---|
| (Cl)⁻ | 64,0 |
| (SO₄)²⁻ | 0,23 |
| (OH)⁻ | 0,9 |
| (Ca)²⁺ | 43,2 |
| (Na)⁺ | 21,9 |

**Table 3**

| Chemical composition of solid waste | |
|---|---|
| Name | Content (%) |
| CaSO (not bonded) | 4,8 - 8,4 |
| Ca(OH)₂ | 37,3 - 49,3 |
| CaSO₄ | 6,4 - 9,9 |
| CaCO₃ | 23,2 - 29,1 |
| Mg(OH)₂ | 2,9 - 3,7 |
| SIO₂ | 2,5 - 3,2 |
| NH₄OH | 0,5 - 0,7 |
| etc. | 8,1 - 10,9 |

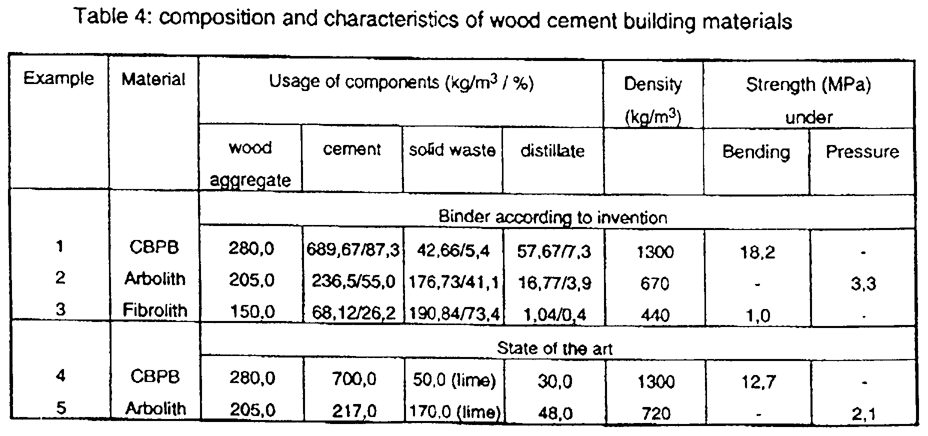

## Claims

1. A binder for wood-based cement-bonded materials comprising Portland cement and distillate from soda-ash production, **characterized in that** the binder additionally contains an aqueous suspension of soda-ash production solid waste with the composition as given below (on a dry mass basis) in %:
| | |
|---|---|
| Portland cement | 26.2 - 87.3 |
| Soda-ash production distillate | 0.4 - 7.3 |
| Aqueous suspension of soda-ash production solid waste | 5.4 - 73.4 |
